# EUROPÄISCHE PATENTSCHRIFT

(11) **EP 1 315 260 B1**
(45) Veröffentlichungstag und Bekanntmachung des Hinweises auf die Patenterteilung: **16.09.2009**
(21) Anmeldenummer: 02021950.7
(22) Anmeldetag: 28.09.2002
(51) Int. Cl.: H02G 3/04

(54) **Verfahren und Vorrichtung zum Führen von Leitungen zu Arbeitsplätzen in einem Raum**
Method and device for bringing cables to workplaces in a room
Méthode et dispositif d'amenée de câbles à des postes de travail dans une pièce

(30) Priorität: 21.11.2001 DE 10158011
(43) Veröffentlichungstag der Anmeldung: 28.05.2003
(73) Patentinhaber: Schaffitzel, Hermann, 74613 Öhringen (DE)
(72) Erfinder: Schaffitzel, Hermann, 74613 Öhringen (DE)
(74) Vertreter: Patentanwälte Ruff, Wilhelm, Beier, Dauster & Partner

(56) Entgegenhaltungen:
- WO-A-91/07791
- DE-A- 4 220 844

## Beschreibung

Die Erfindung betrifft ein Verfahren zum Führen von Leitungen, insbesondere elektrischen Versorgungsleitungen und/oder Datenleitungen, zu Arbeitsplätzen in einem Raum und eine Vorrichtung zum Durchführen des Verfahrens.

Um Arbeitsplätze in einem Büro oder einem anderen Raum mit energieführenden Leitungen und/oder Datenleitungen zu versorgen, ist es bekannt, diese Leitungen in einem doppelten Boden oder in einer abgehängten Decke des Raumes zu verlegen und im Bereich der Arbeitsplätze Anschlussstellen vorzusehen. Diese Einrichtungen, wie auch andere Versorgungseinrichtungen geben weitgehend die Möglichkeit der Anordnung der Arbeitsplätze vor, beispielsweise das Aufstellen von Arbeitstischen. Wird aus organisatorischen Gründen oder aus arbeitstechnischen Gründen eine andere Anordnung der Arbeitsplätze gewünscht, so sind entweder aufwendige Umgestaltungen bezüglich der Leitungsverlegung und der festen Anschlüsse erforderlich, oder die Anschlussleitungen werden in sehr störender Weise frei in dem Raum verlegt.

Es ist auch bekannt (WO 91/07791 A) Leitungen zu Arbeitsplätzen in einem Raum mittels einer Aufnahmeeinrichtung zu führen. Diese Aufnahmeeinrichtung wird aus auf dem Boden des Raumes aufstehenden Säulen und von diesen getragenen, gegebenenfalls auch an der Decke aufgehängten, aneinander gereihten Profilstücken gebildet. Die Profilstücke besitzen einen H-förmigen Querschnitt. Sie bilden direkt Ablagen für Leitungen. Sie werden zu rohrartigen Gebilden mittels Deckeln verschlossen. Die aus den Profilstücken zusammengesetzte Aufnahmeeinrichtung besitzt nur geradlinige Abschnitte, die durch Kniestücke oder T-Stücke o.dgl. verbunden werden, wenn eine Umlenkung erforderlich ist.

Der Erfindung liegt die Aufgabe zugrunde, ein Verfahren und eine Vorrichtung zum Führen von Leitungen zu Arbeitsplätzen zu schaffen, die flexibel an die Anordnung der Arbeitsplätze anpassbar ist und die auch eine nachträgliche Veränderung der Anordnung der Arbeitsplätze erlaubt, ohne dass Anschlussleitungen frei in dem Raum verlegt werden müssen.

Diese Aufgabe wird durch den Anspruch 1 gelöst.

Damit ist es möglich, die Leitungen, beispielsweise elektrische Versorgungsleitungen und Datenleitungen und eventuell auch Leitungen für Saug- oder Druckluft, geordnet zu verlegen und zu den einzelnen Arbeitsplätzen zu führen, ohne dass sie den Verkehrsraum stören, in welchem sich Personen bewegen. Bevorzugt wird deshalb die Anordnung der Aufnahmeeinrichtung etwa 2,30m oberhalb des Bodens vorgesehen. Da die Aufnahmeeinrichtung nicht in dem Boden oder in der Decke verlegt ist, sondern räumlich veränderbar ist, lässt sich die Aufteilung der Anordnung von Arbeitsplätzen auch nachträglich ohne weiteres verändern, ohne dass aufwändige Installationsarbeiten in dem Raum notwendig werden. Die Aufgabe wird mit einer Vorrichtung dadurch gelöst, dass eine frei in dem Raum anbringbare Aufnahmeeinrichtung mit einer schalenförmigen Ablage für Leitungen vorgesehen ist, die aus in einer im wesentlichen horizontalen Ebene verformbaren und in der Länge veränderbaren Längstragelementen und daran anbringbaren, die schalenförmige Ablage bildenden Elementen besteht.

Weitere Merkmale und Vorteile der Erfindung ergeben sich aus der nachfolgenden Beschreibung der in der Zeichnung dargestellten Ausführungsbeispiele und den Unteransprüchen.
- Fig. 1: zeigt eine Draufsicht auf mehrere Arbeitsplätze beispielsweise eines Großraumbüros, zu welchen Versorgungsleitungen und/oder Datenleitungen mittels einer erfindungsgemäßen Vorrichtung geführt sind,
- Fig. 2: einen Schnitt entlang der Linie II-II der Fig. 1,
- Fig. 3: eine Teilansicht des Schnittes nach Fig. 2 in vergrößertem Maßstab,
- Fig. 4: und 5 perspektivische Teilansichten von erfindungsgemäßen Längstragelementen und dazu quer angeordneten Elementen und
- Fig. 6: eine Draufsicht auf miteinander verbundene, eine Ablage bildende Elemente.

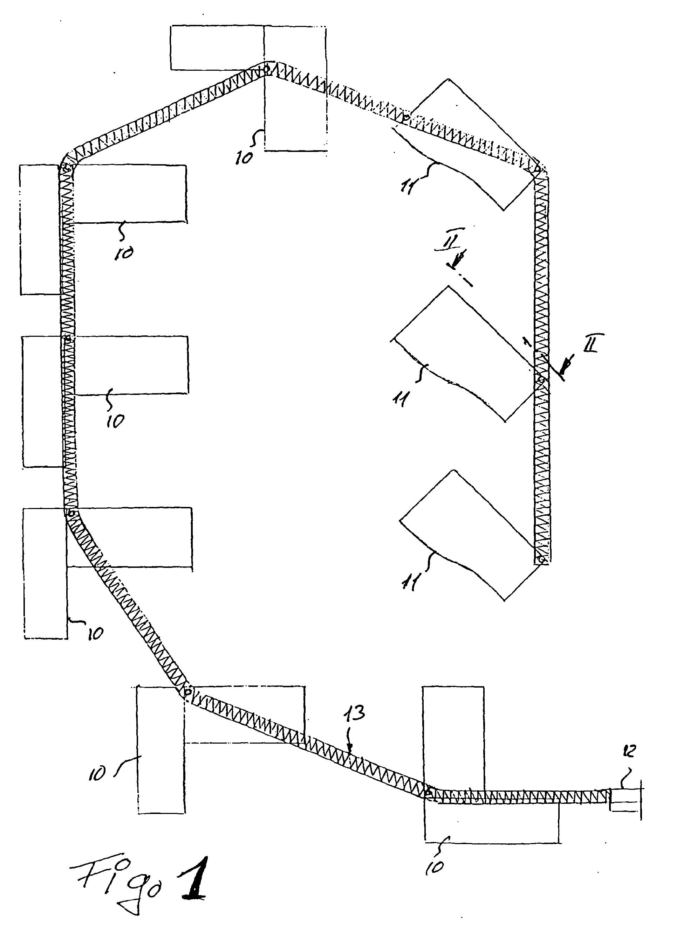

In dem in Fig. 1 in der Draufsicht dargestellten Raum sind mehrere Arbeitsplätze 10 und 11 nach einem ausgewählten System aufgestellt. Diese Arbeitsplätze, die beispielsweise Computerarbeitsplätze in einem Büro oder Montagearbeitsplätze in einer Montagehalle sein können, müssen üblicherweise an elektrische Versorgungsleitungen und häufig auch an Datenleitungen angeschlossen sein. Darüber hinaus besteht auch oft das Bedürfnis, zu den Arbeitsplätzen 10, 11 Saug- und/oder Druckluft über Leitungen zuzuführen. Gemäß der vorliegenden Erfindung sind die Leitungen an einen Raumanschluss 12 angeschlossen, der sich im Prinzip an beliebiger Stelle des Raumes befinden kann, d.h. an einer Wand, im Boden oder auch in der Decke des Raumes. Die Leitungen werden in einer Aufnahmeeinrichtung 13 abgelegt und zu den Arbeitsplätzen 10, 11 geführt, die weitgehend unabhängig von dem Raum installiert werden kann. Die Aufnahmeeinrichtung 13 bildet eine schalenförmige Ablage für die Leitungen, die oberhalb des üblichen Verkehrsbereichs eines Raumes angeordnet wird, d.h. vorzugsweise in einer Höhe von 2,30m über dem Boden des Raumes. Die in dieser Höhe angeordnete Aufnahmeeinrichtung 13 behindert die Bewegungen von in dem Raum befindlichen Personen nicht, ist jedoch ohne weiteres für diese Personen zugänglich, wozu diese gegebenenfalls einfache Tritte benötigen.

Bei dem Ausführungsbeispiel ist die Aufnahmeeinrichtung 13 unabhängig von dem Boden oder der Decke des Raumes gehalten. Sie ist mit Ständern 14 abgestützt, die jeweils an einer Tischplatte 15 der Arbeitsplätze 10, 11 angebracht sind. Die Ständer 14 werden beispielsweise mittels eines nicht dargestellten Klemmhalters an der Tischplatte befestigt. An dem oberen Ende des Ständers 14 ist ein Bügel 16 angebracht, der an seinen beiden nach oben weisenden Enden Längstragelemente aufnimmt. Die Längstragelemente sind beispielsweise mittels Schrauben an dem Ende des Bügels 16 befestigt. Die Längstragelemente sind vertikal ausgerichtete Profilschienen 17, 18, die aus Kunststoff oder Metall hergestellt sind und die an ihrem oberen und/oder unteren Ende jeweils mit einer Verdickung versehen sind. Zwischen den beiden in einem Abstand von 15cm bis 30cm parallel zueinander verlaufenden Profilschienen 17, 18 sind quer verlaufende, leistenförmige Elemente 19 gehalten, die bei dem Ausführungsbeispiel zwei unter einem stumpfen Winkel zueinander geneigte Schenkel aufweisen und so eine schalenförmige Ablage bilden. Die leistenförmigen Elemente 19 sind bei dem Ausführungsbeispiel von unten an die Profilschienen 17, 18 angeklipst. Selbstverständlich sind auch andere Befestigungsmöglichkeiten zulässig, insbesondere aber auch ein Aufstecken von oben. Die Befestigung der Elemente 19 an den Profilschienen 17, 18 erfolgt so, dass die Elemente 19 in Längsrichtung der Profilschienen 17 verschiebbar sind. Mit der gleichen Anzahl von Elementen 19 können somit wannenförmige Ablagen unterschiedlicher Länge gebildet werden, indem in Längsrichtung unterschiedliche Abstände zwischen den Elementen 19 vorgesehen werden. Die Elemente selbst können dann in der einmal gegebenen Position mittels Stopfen oder Klemmen o.dgl. fixiert werden.

Die als Längstragelemente dienenden Profilschienen 17, 18 können beispielsweise aus mehreren einander überlappenden und verschiebbar miteinander verbundenen Teilstücken bestehen, so dass die Längstragelemente in ihrer Länge veränderbar sind.

Wie aus Fig. 1 zu ersehen ist, sind bei diesem Ausführungsbeispiel zwischen den einzelnen Arbeitsplätzen 10 und 11 jeweils gerade Abschnitte der Ablageeinrichtung 13 vorgesehen, die unterschiedliche Längen aufweisen. Es ist möglich, die Profilschienen 17, 18 in diesen Längen vorzufertigen und jeweils aufeinanderfolgende Profilschienen 17, 18 an den Ständern 14 anzubringen. Es ist jedoch auch möglich, aus relativ zueinander verschiebbaren Abschnitten bestehende Profilschienen 17, 18 zu verwenden, so dass diese Profilschienen 17, 18 an dem Aufstellungsort in der richtigen Länge eingestellt und fixiert werden.

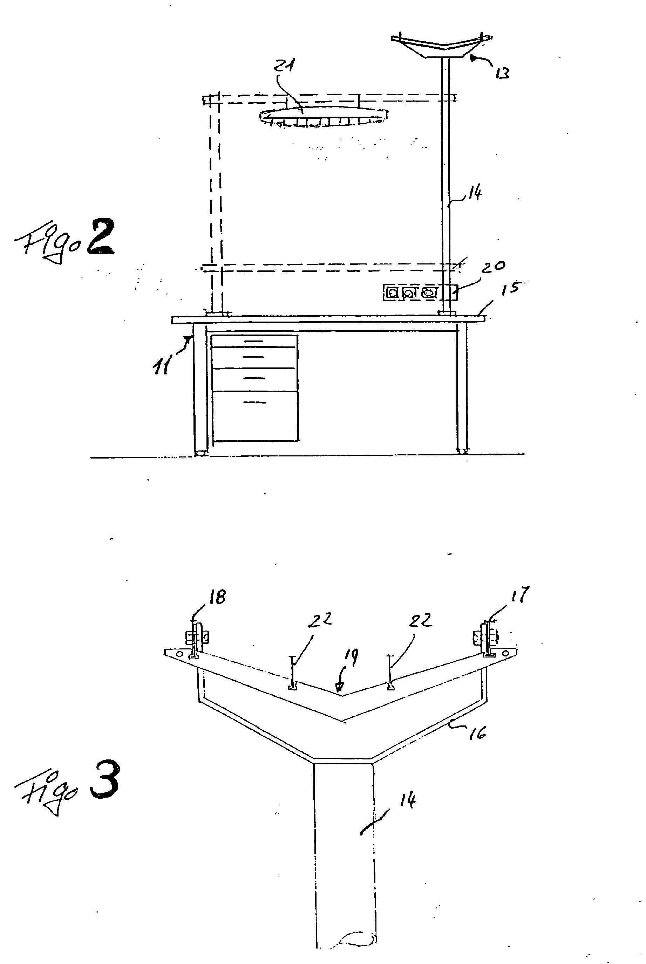

Leitungsabzweigungen und/oder Geräteanschlüsse, wie Steckdosen o.dgl., können an den quer verlaufenden Elementen oder an den Längstragelementen vorgesehen werden. Ebenso können derartige Anschlusseinrichtungen an den Ständern 14 angebracht werden, wie dies beispielsweise in Fig. 2 dargestellt ist, in welcher dem Ständer 14 eine Steckdosenleiste 20 angebracht ist. An diesen Ständern können auch Rahmen gehalten werden, wie dies in Fig. 2 dargestellt ist, an welchem eine Lampe 21 angebracht ist, die von den in der Aufnahmeeinrichtung verlegten Leitungen gespeist wird.

Derartige Lampen oder andere Beleuchtungskörper können auch an den Längstragelementen oder den quer dazu verlaufenden Elementen angebracht werden.

Die Längstragelemente 17, 18 oder gegebenenfalls dazwischen angeordnete ergänzende Profilschienen 22 können einmal dazu dienen, dass eine Unterteilung der Leitungen in Datenleitungen, elektrische Versorgungsleitungen oder sonstige Leitungen erfolgen kann. Darüber hinaus ist es möglich, beispielsweise die Profilschienen 17, 18 oder 22 als Niederspannungsstromschienen auszunutzen, an denen Lampen oder verfahrbare Beleuchtungswagen angebracht werden.

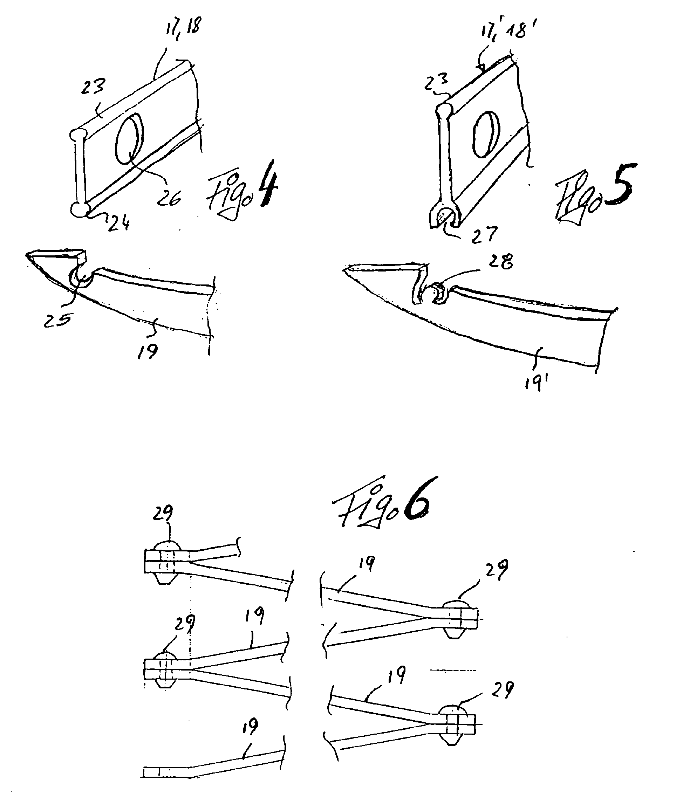

In Fig. 4 ist dargestellt, dass die Längstragelemente als Profilschienen 17, 18 ausgebildet sind, die einen vertikal angeordneten Steg und obere und untere Verdickungen 23, 24 aufweisen. Auf die untere Verdickung 24 werden die quer verlaufenden Elemente 19 aufgeklipst, die eine auf die Verdickung 24 aufklipsbare Aussparung 25 aufweisen. Wie in Fig. 4 ferner dargestellt ist, sind bevorzugt die Profilschienen 17, 18 in ihren Stegen mit vorzugsweise in einem Rastermaß angeordneten Löchern 26 versehen, die als Befestigungselemente dienen, an welchen Lampen oder Abzweigungen oder Steckdosen o.dgl. befestigbar sind.

Bei dem Ausführungsbeispiel nach Fig. 5 sind die Profilschienen 17', 18' am oberen Ende ihres Steges mit einer Verdickung und am unteren Ende ihres Steges mit einer Rastaufnahme 27 versehen, in welche entsprechend geformte Vorsprünge 28 der Elemente 19' einklipsbar sind.

Bei den Ausführungsformen nach Fig. 4 und 5 ist dargestellt, dass die Elemente 19, 19' von unten an die Profilschienen 17, 17', 18, 18' angeklipst werden. Selbstverständlich ist es auch ohne weiteres möglich, diese von oben an die Profilschienen anzuklipsen.

Bei der Ausführungsform nach Fig. 6 ist vorgesehen, dass die quer verlaufenden Elemente 19 jeweils abwechselnd an ihren Enden miteinander verbunden sind, vorzugsweise ebenfalls mit einer Klipsverbindung mittels einklipsbarer Stopfen 29. Die elastisch nachgiebigen Elemente 19 lassen sich somit ziehharmonikaartig auseinanderschieben oder zusammendrücken, so dass eine Längenveränderung und eine Umlenkung um Kurven möglich ist, ohne dass besondere Einstellungen der Abstände von Hand vorgenommen werden müssen.

Wie schon erwähnt wurde, können die als Längstragelemente dienenden Profilschienen 17, 18 aus Metall oder Kunststoff oder aber auch aus einem Verbundwerkstoff bestehen. Von ihnen wird nur eine gewisse Festigkeit in vertikaler Richtung benötigt, so dass die Profile entsprechend gestaltet werden. Das Profil wird so gestaltet, dass es in Querrichtung relativ leicht plastisch oder elastisch verformbar ist, so dass die Aufnahmeeinrichtung 13 auch in einer horizontalen Ebene in Kurven verlegt werden kann, die auch noch nachträglich veränderbar sind.

Außer Profilschienen können als Längstragelemente auch andere Elemente eingesetzt werden, insbesondere Rohre. Ebenso ist die Verwendung von Seilen möglich, die jedoch dann jeweils zwischen zwei Ständern 14 gespannt werden müssen.

Anstelle von an Tischplatten 15 von Arbeitsplätzen angebrachten Ständern 14 können auch andere Ständer eingesetzt werden. Beispielsweise können auf den Boden aufstehende und am Boden angebrachte Ständer eingesetzt werden. Ebenso ist es möglich, die Längstragelemente mittels Hängevorrichtungen an der Decke des Raumes aufzuhängen. Die unterschiedlichen Befestigungsmöglichkeiten können selbstverständlich auch in Mischanordnung vorgesehen werden, d.h. mit einer Aufnahmeeinrichtung können an der Tischplatte 15 von Arbeitsplätzen angebrachte Ständer 14, auf dem Boden aufstehende Ständer oder von der Decke hängende Aufhängevorrichtungen eingesetzt werden.

Die quer zwischen den Längstragelementen angeordneten Elemente 19 haben bevorzugt eine Form, die eine schalenförmige Ablage ergibt. Hierzu können sie aus zwei in einem Winkel angeordneten Abschnitten bestehen, wie dies in Fig. 3 dargestellt ist. Sie können jedoch auch eine U- oder C-förmige oder auf andere Weise nach unten gewölbte Gestalt besitzen. Der Vorteil der schalenförmigen Gestaltung ist, dass die darin abgelegten Leitungen gegen seitliches Verschieben und Heruntergleiten gesichert sind.

## Patentansprüche

1. Verfahren zum Führen von Leitungen, insbesondere elektrischen Versorgungsleitungen und/oder Datenleitungen, zu Arbeitsplätzen in einem Raum, wozu oberhalb des Bodens des Raumes eine Aufnahmeeinrichtung (13) mit einer Ablage für Leitungen angeordnet wird, **dadurch gekennzeichnet, dass** die Aufnahmeeinrichtung (13), die in einer Höhe von wenigstens 2,0 m oberhalb des Bodens des Raums angeordnet wird, aus Längstragelementen (17, 18, 17', 18'), die in einer im Wesentlichen horizontalen Ebene elastisch oder plastisch verformbar und in ihrer Länge veränderbar sind, und aus an den Längstragelementen (17, 18, 17', 18') anbringbaren Elementen (19, 19') gebildet wird, die eine schalenförmige Ablage bilden.

2. Verfahren nach Anspruch 1, **dadurch gekennzeichnet, dass** die Aufnahmeeinrichtung (13) aus wenigstens zwei in einer im wesentlichen horizontalen Ebene verformbaren und zu den Arbeitsplätzen führenden Längstragelementen (17, 18, 17', 18'), und einer Vielzahl von dazwischen angeordneten, quer verlaufenden leistenförmigen Elementen (19, 19') gebildet wird.

3. Verfahren nach Anspruch 2, **dadurch gekennzeichnet, dass** die Längstragelemente (17, 18) im Bereich der Arbeitsplätze (10, 11) fixiert werden.

4. Verfahren nach Anspruch 3, **dadurch gekennzeichnet, dass** die Längstragelemente (17, 18) an den Arbeitsplätzen (10, 11) mittels Ständern (14) abgestützt werden.

5. Verfahren nach einem der Ansprüche 2 bis 4, **dadurch gekennzeichnet, dass** bei einem Ändern der Länge der Längstragelemente (17, 18) und/oder bei einem Verlagern der Längstragelemente in horizontaler Ebene die quer verlaufenden leistenförmigen Elemente relativ zueinander an den Längstragelementen (17, 18) verschoben werden.

6. Vorrichtung zum Durchführen des Verfahrens nach einem der Ansprüche 1 bis 5, **dadurch gekennzeichnet, dass** die Aufnahmeeinrichtung (13) aus im Wesentlichen in einer horizontalen Ebene verformbaren und in der Länge veränderbaren Längstragelementen (17, 18, 17', 18') und daran anbringbaren, die schalenförmige Ablage bildenden Elementen (19) besteht.

7. Vorrichtung nach Anspruch 6, **dadurch gekennzeichnet, dass** wenigstens zwei Längstragelemente (17, 18) vorgesehen sind, zwischen denen eine Vielzahl von quer verlaufenden, leistenförmigen Elementen (19) angeordnet ist, die eine vorzugsweise schalenförmig gewölbte Ablage für Leitungen bilden.

8. Vorrichtung nach Anspruch 6 oder 7, **dadurch gekennzeichnet, dass** die quer verlaufenden Elemente (19) in Längsrichtung verschiebbar an den Längstragelementen (17, 18) gerührt sind.

9. Vorrichtung nach Anspruch 8, **dadurch gekennzeichnet, dass** Mittel zum Fixieren der Position der leistenförmigen Elemente (19) an den Längstragelementen (20) vorgesehen sind.

10. Vorrichtung nach einem der Ansprüche 6 bis 9, **dadurch gekennzeichnet, dass** die Längstragelemente (17, 18) Profilleisten sind, die quer zu ihren vertikalen Stegen plastisch oder elastisch verformbar sind.

11. Vorrichtung nach Anspruch 10, **dadurch gekennzeichnet, dass** die leistenförmigen Elemente (19, 19') an die Längstragelemente (17, 18, 17', 18') angeklipst sind.

12. Vorrichtung nach einem der Ansprüche 6 bis 11, **dadurch gekennzeichnet, dass** die Enden der flexiblen leistenförmigen Elemente (19) abwechselnd mit einem vorausgehenden und einem nachfolgenden leistenförmigen Element (19) verbunden sind.

13. Vorrichtung nach einem der Ansprüche 1 bis 12, **dadurch gekennzeichnet, dass** die Längstragelemente (17, 18, 17', 18') mit Geräteaufnahmen (26) für Leuchten o.dgl. versehen sind.

14. Vorrichtung nach einem der Ansprüche 6 bis 13, **dadurch gekennzeichnet, dass** in die Längstragelemente (17, 18) Stromleiter integriert sind.

## Claims

1. Method for bringing of cables, in particular electric power cables and/or data cables, to workplaces in a room, for which purpose a retaining device (13) with accommodation for cables is arranged above the floor of the room, **characterized in that** the retaining device (13) arranged at a height of at least 2.0 m above the floor of the room is formed by longitudinal support elements (17, 18, 17', 18') which in a substantially horizontal plane are elastically or plastically shapeable and variable in length, and by elements (19, 19') attachable to the longitudinal support elements (17, 18, 17', 18') and forming a tray-like rack.

2. Method according to Claim 1, **characterized in that** the retaining device (13) is formed by at least two longitudinal support elements (17, 18, 17', 18') which in a substantially horizontal plane are shapeable and lead to the workplaces, and a plurality of strip-like elements (19, 19') arranged between them and extending transversely.

3. Method according to Claim 2, **characterized in that** the longitudinal support elements (17, 18) are fixed in the area of the workplaces (10, 11).

4. Method according to Claim 3, **characterized in that** the longitudinal support elements (17, 18) are supported on the workplaces (10, 11) using columns (14).

5. Method according to one of Claims 2 to 4, **characterized in that** in the event of a change in the length of the longitudinal support elements (17, 18) and/or a displacement of the longitudinal support elements in the horizontal plane, the transversely extending strip-like elements are displaced relative to one another at the longitudinal support elements (17, 18).

6. Device for performing the method according to one of Claims 1 to 5, **characterized in that** the retaining device (13) comprises longitudinal support elements (17, 18, 17', 18') which in a substantially horizontal plane are shapeable and variable in length, and elements (19) attachable thereto and forming the tray-like rack.

7. Device according to Claim 6, **characterized in that** at least two longitudinal support elements (17, 18) are provided, between which is arranged a plurality of transversely extending strip-like elements (19) forming a rack for cables that is preferably curved in a tray-like form.

8. Device according to Claim 6 or 7, **characterized in that** the transversely extending elements (19) are guided displaceably in the longitudinal direction on the longitudinal support elements (17, 18).

9. Device according to Claim 8, **characterized in that** means are provided for fixing the positions of the strip-like elements (19) on the longitudinal support elements (20).

10. Device according to one of Claims 6 to 9, **characterized in that** the longitudinal support elements (17, 18) are profiled strips plastically or elastically shapeable transversely to their vertical webs.

11. Device according to Claim 10, **characterized in that** the strip-like elements (19, 19') are clipped onto the longitudinal support elements (17, 18, 17', 18').

12. Device according to one of Claims 6 to 11, **characterized in that** the ends of the flexible strip-like elements (19) are connected alternatingly to a preceding and to a following strip-like element (19).

13. Device according to one of Claims 1 to 12, **characterized in that** the longitudinal support elements (17, 18, 17', 18') are provided with appliance mountings (26) for light fittings or the like.

14. Device according to one of Claims 6 to 13, **characterized in that** current conductors are integrated into the longitudinal support elements (17, 18).

## Revendications

1. Méthode d'amenée de câbles, en particulier de lignes d'alimentation électriques et/ou de lignes de transmission de données, à des postes de travail dans une pièce, sachant qu'au-dessus du sol de la pièce est placé un dispositif formant réceptacle (13) avec un logement pour câbles, **caractérisée en ce que** le dispositif formant réceptacle (13), qui est placé à une hauteur d'au moins 2,0 m au-dessus du sol de la pièce, est constitué de supports longitudinaux (17, 18, 17', 18') déformables de manière élastique ou plastique dans un plan essentiellement horizontal, et modifiables dans leur longueur, ainsi que d'éléments (19, 19') qui se fixent sur les supports longitudinaux (17, 18, 17', 18') et forment un logement en forme de cuvette.

2. Méthode selon la revendication 1, **caractérisée en ce que** le dispositif formant réceptacle (13) est constitué d'au moins deux supports longitudinaux (17, 18, 17', 18') déformables dans un plan essentiellement horizontal et menant aux postes de travail, et d'une multitude d'éléments en forme de moulure (19, 19') intercalés et s'étendant dans le sens transversal.

3. Méthode selon la revendication 2, **caractérisée en ce que** les supports longitudinaux (17, 18) sont fixés dans la zone des postes de travail (10, 11).

4. Méthode selon la revendication 3, **caractérisée en ce que** les supports longitudinaux (17, 18) sont soutenus par des montants (14) aux postes de travail (10, 11).

5. Méthode selon l'une des revendications 2 à 4, **caractérisée en ce qu'**en cas de modification de la longueur des supports longitudinaux (17, 18) et/ou d'un déplacement des supports longitudinaux dans le plan horizontal, les éléments transversaux en forme de moulure sont déplacés les uns par rapport aux autres sur les supports longitudinaux (17, 18).

6. Dispositif pour réaliser la méthode selon l'une des revendications 1 à 5, **caractérisé en ce que** le dispositif formant réceptacle (13) est constitué de supports longitudinaux (17, 18, 17', 18') déformables dans un plan essentiellement horizontal et modifiables dans leur longueur, ainsi que d'éléments (19) qui peuvent y être montés et forment le logement en forme de cuvette.

7. Dispositif selon la revendication 6, **caractérisé en ce que** sont prévus au moins deux supports longitudinaux (17, 18), entre lesquels est placée une multitude d'éléments transversaux (19) en forme de moulure qui forment de préférence un logement pour câbles incurvé en forme de cuvette.

8. Dispositif selon la revendication 6 ou 7, **caractérisé en ce que** les éléments transversaux (19) sont guidés sur les supports longitudinaux (17, 18) de manière mobile dans le sens longitudinal.

9. Dispositif selon la revendication 8, **caractérisé en ce** sont prévus des moyens pour fixer la position des éléments en forme de moulure (19) sur les supports longitudinaux (20).

10. Dispositif selon l'une des revendications 6 à 9, **caractérisé en ce que** les supports longitudinaux (17, 18) sont des baguettes profilées déformables de manière plastique ou élastique dans le sens transversal par rapport à leurs branches verticales.

11. Dispositif selon la revendication 10, **caractérisé en ce que** les éléments en forme de moulure (19, 19') sont enclipsés sur les supports longitudinaux (17, 18, 17', 18').

12. Dispositif selon l'une des revendications 6 à 11, **caractérisé en ce que** les extrémités des éléments souples en forme de moulure (19) sont reliées en alternance avec un élément en forme de moulure (19) précédent et avec un élément en forme de moulure (19) suivant.

13. Dispositif selon l'une des revendications 1 à 12, **caractérisé en ce que** les supports longitudinaux (17, 18, 17', 18') sont munis de logements (26) pour luminaires ou équipements similaires.

14. Dispositif selon l'une des revendications 6 à 13, **caractérisé en ce que** des conducteurs électriques sont intégrés dans les supports longitudinaux (17, 18).
